# FASCICULE DE BREVET EUROPEEN

(11) **EP 2 564 449 B1**
(45) Date de publication et mention de la délivrance du brevet: **21.03.2018**
(21) Numéro de dépôt: 11714577.1
(22) Date de dépôt: 18.04.2011
(51) Int. Cl.: H01M 2/10, B60K 1/04, B60L 11/18

(54) **COFFRE A BATTERIE POUR VEHICULE ELECTRIQUE OU HYDRIDE ET PROCEDE DE MONTAGE SUR LE VEHICULE**
BATTERIEGEHÄUSE FÜR ELEKTRISCHES ODER HYBRIDES FAHRZEUG UND VERFAHREN ZUR MONTAGE DES BESAGTEN GEHÄUSES AN EINEM FAHRZEUG
BATTERY BOX FOR ELECTRIC OR HYBRID VEHICLE AND METHOD FOR MOUNTING SAID BOX ON THE VEHICLE

(30) Priorité: 28.04.2010 FR 1053290
(43) Date de publication de la demande: 06.03.2013
(73) Titulaire: Compagnie Générale des Etablissements Michelin, 63000 Clermont-Ferrand (FR)
(72) Inventeur: JOYE, Olivier, F-63040 Clermont-Ferrand Cedex 9 (FR)
(74) Mandataire: Roussy, Delphine
(86) Numéro de dépôt international: PCT/EP2011/056141
(87) Numéro de publication internationale: WO 2011/134824

(56) Documents cités:
- WO-A1-97/28016
- JP-A- 2007 134 138
- US-A- 4 365 681
- US-A- 5 392 873
- US-A1- 2009 236 162

## Description

La présente invention concerne le domaine des véhicules à propulsion électrique ou hybride, notamment de véhicule automobile.

Par « véhicule électrique automobile », on entend un véhicule tel que défini dans le règlement N°100 des Nations Unies concernant l'homologation des véhicules électriques à batterie.

La présente invention concerne plus particulièrement des coffres à batterie situés sous le plancher d'un véhicule électrique automobile.

Une batterie est formée avec un ou plusieurs ensembles accumulateurs permettant de produire de l'énergie électrique pour la motorisation du véhicule électrique ou hybride.

Un coffre à batterie peut comprendre une chambre de réception de blocs d'éléments accumulateur d'énergie électrique reliés à un dispositif électrique ou électronique par un sectionneur afin de gérer la transmission d'énergie électrique au véhicule. Les blocs d'éléments accumulateurs d'énergie électrique sont mis en place dans le coffre à batterie, puis le coffre à batterie est monté sous le châssis du véhicule. Lorsqu'un élément accumulateur d'énergie ou tout un bloc est défaillant, le coffre à batterie doit être séparé du véhicule afin de réparer ou de remplacer l'élément défectueux. L'implantation du coffre à batterie sous le véhicule rend la manipulation du coffre peu aisée. En effet, il est difficile de positionner le coffre à batterie à l'aveuglette afin de le fixer au véhicule. On pourra se référer à cet égard au document WO 97/28016 qui décrit un véhicule automobile comportant un compartiment de réception d'un coffre à batteries et une barre mobile pivotante entre une position de réception du coffre à batteries et une position de fermeture du compartiment permettant à la fois le maintien du coffre dans le compartiment et la connexion électrique avec le véhicule automobile. Toutefois, le positionnement du coffre à batteries dans le compartiment est réalisé à l'aide de deux ailettes longitudinales fixées sur chaque côté du coffre destinées à coopérer avec le compartiment. Le document US 5392873 décrit une structure pour fixer des batteries sur un véhicule automobile. Le document US 4365681 décrit une structure de support d'une pluralité de batteries destinée à être positionnée sur le cadre de véhicules par des plots de positionnement dont une extrémité est soudée au cadre du véhicule et une extrémité est conique afin de coopérer avec un perçage pratiqué sur la structure de support. L'objectif de l'invention est de faciliter le montage d'un coffre à batterie sur un véhicule afin d'obtenir un montage et un démontage rapides et aisés du coffre à batterie sur le véhicule.

Dans un mode de réalisation, l'invention définie par les revendications concerne un coffre à batterie pour véhicule comprenant au moins une enveloppe externe délimitant une chambre de réception de la batterie et comprenant un support et un couvercle amovible placés l'un au-dessus de l'autre et reliés entre eux.

Le coffre à batterie comprend des pattes de positionnement et des pattes de fixation dudit coffre à batterie sur un véhicule, lesdites pattes de positionnement et de fixation étant montées sur le cadre externe.

Ainsi, le coffre à batterie est aisément et rapidement positionné par les pattes de positionnement puis fixé par les pattes de fixation.

Deux pattes de positionnement peuvent être suffisantes. Avantageusement, chaque patte de positionnement comprend un passage de réception d'un plot de positionnement.

Chaque plot de positionnement comprend une extrémité filetée et une extrémité conique, l'extrémité conique étant adaptée pour s'insérer dans le passage de réception de la patte de positionnement.

Avantageusement, chaque patte de positionnement comprend deux équerres en forme de L reliées entre elles, lesdites équerres étant fixées sur l'enveloppe externe du coffre à batterie.

Selon un autre mode de réalisation, le coffre à batterie comprend une deuxième enveloppe externe délimitant une seconde chambre de réception de batterie et comprenant un couvercle placé au-dessus du premier couvercle.

Dans ce mode de réalisation, l'une des pattes de positionnement comprend avantageusement deux équerres supplémentaires reliées aux deux premières équerres et montées sur la seconde enveloppe externe.

Le coffre à batterie peut comprendre un cloisonnement interne délimitant des compartiments dans ladite chambre de réception, lesdits compartiments étant adaptés pour réceptionner des blocs accumulateurs d'énergie.

Le coffre à batterie comporte en outre de préférence au moins un évidement extérieur en creux pour la réception d'un organe amovible d'un sectionneur relié à la batterie.

Selon un second aspect, l'invention concerne un procédé défini par les revendications, de montage d'un coffre à batterie sur un véhicule, ledit coffre à batterie comprenant au moins une enveloppe externe délimitant une chambre de réception de la batterie et comprenant un support et un couvercle amovible placés l'un au-dessus de l'autre et reliés entre eux. Selon le procédé de montage, on visse tout d'abord des plots de positionnement sur le véhicule, puis on met en place le coffre à batterie sur le véhicule, de sorte que les plots de positionnement soient insérés dans des pattes de positionnement prévues sur ledit coffre à batterie. On fixe ensuite le coffre à batterie sur le véhicule, par l'intermédiaire de pattes de fixation prévues sur le coffre à batterie.

Deux plots de positionnement peuvent par exemple être fixés sur le véhicule.

Avantageusement, on abaisse le véhicule et/ou on surélève le coffre à batterie de manière à réaliser l'étape de mise en place.

Chaque plot de positionnement comprend une extrémité filetée et une extrémité conique apte à s'insérer dans un passage de réception prévu sur les pattes de positionnement.

En outre, on peut fixer les pattes de fixation sur le véhicule par le biais de visseries.

Avant de manipuler le coffre à batterie, on sépare de préférence un organe amovible d'un sectionneur relié à la batterie, de manière à isoler le coffre à batterie d'un dispositif électronique de gestion dudit coffre à batterie.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en perspective d'un premier mode de réalisation d'un coffre à batterie selon l'invention ;
- la figure 2 représente une vue détaillée d'une patte de positionnement de la figure 1 ;
- la figure 3 représente une vue en perspective d'un deuxième mode de réalisation d'un coffre à batterie selon un autre aspect de l'invention ;
- la figure 4 représente schématiquement le montage d'un coffre à batterie selon l'invention sur un véhicule ;
- la figure 5 représente une vue en perspective d'un sectionneur ; et
- la figure 6 représente un schéma électrique du coffre à batterie.

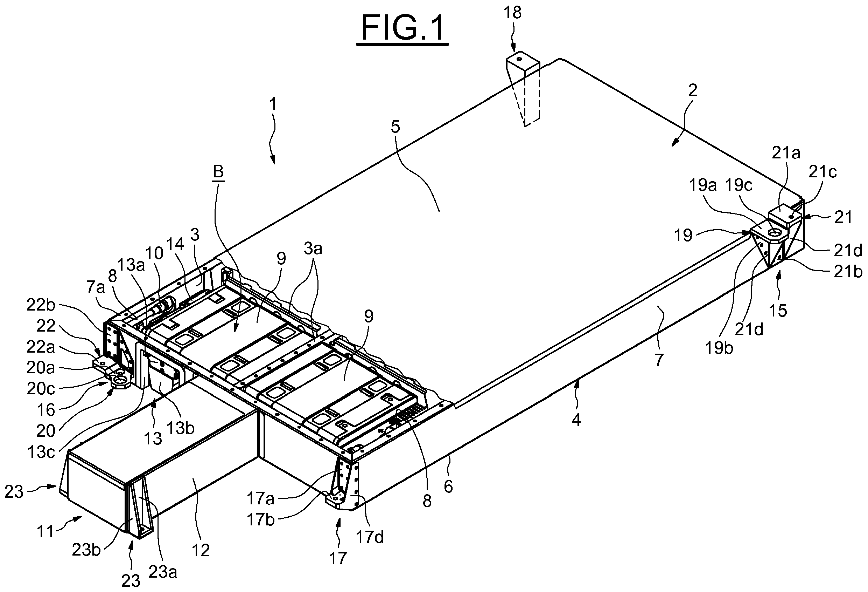

Le coffre à batterie 1 représenté sur la figure 1 renferme des blocs accumulateur d'énergie électrique (non représentés) afin d'alimenter un véhicule électrique ou hybride en énergie électrique.

Le coffre à batterie 1 comprend une enveloppe externe 2, par exemple métallique, de forme générale parallélépipédique. L'enveloppe externe 2 délimite une chambre de réception 3 et comprend un support 4 et un couvercle amovible 5 reliés entre eux.

Le support 4 se présente sous la forme d'une cuvette étanche obtenue par assemblage et/ou soudage de tôles d'épaisseur relativement mince. Le support 4 comprend un fond plat rectangulaire 6 et un cadre latéral 7.

Ce cadre externe 7 présente un rebord périphérique 7a replié vers l'intérieur apte à coopérer avec une zone périphérique du couvercle 5.

La chambre de réception 3 comprend un cloisonnement interne 3a délimitant des compartiments 8 dans lesquels sont disposés des blocs accumulateurs 9 renfermant chacun, dans des boîtiers, plusieurs éléments accumulateur d'énergie.

Tel qu'illustré sur la figure 1, des câbles ou fils de connexion électrique 10 permettent de relier en série les blocs 9 d'éléments accumulateur d'énergie, de façon à constituer une batterie B.

Le coffre à batterie 1 peut comprendre un dispositif électrique ou électronique 11 de gestion des éléments accumulateurs d'énergie, disposé dans un compartiment spécifique 12. On notera que le compartiment spécifique 12 pourrait être intégré à l'enveloppe externe 2 du coffre à batterie 1.

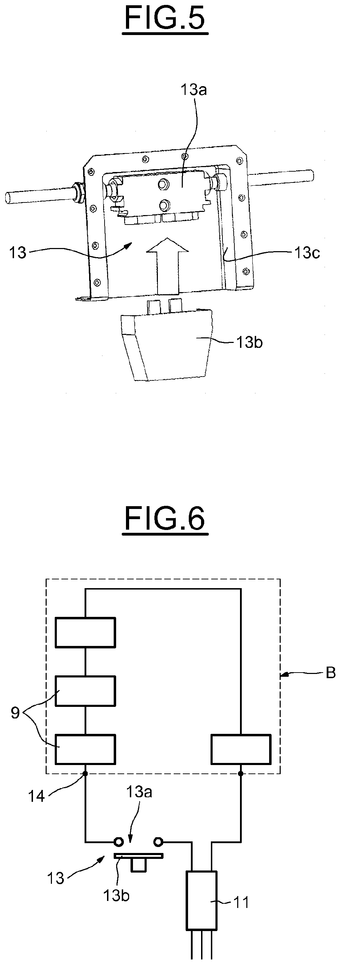

Comme illustré plus précisément sur les figures 5 et 6, le dispositif électronique 11 peut être relié électriquement à l'une des bornes électriques 14 de la batterie B par l'intermédiaire d'un sectionneur 13 comprenant une embase 13a munie de plots espacés de connexion électrique et un organe amovible 13b muni d'une barrette de connexion électrique. L'embase 13a est fixée à l'enveloppe externe 2 et l'organe amovible 13b est installé dans un évidement extérieur 13c en retrait de l'enveloppe externe 2, de manière à être accessible à l'extérieur de l'enveloppe 2 en vue de son accouplement à l'embase 13a ou de sa séparation de l'embase 13a. De cette manière, lorsque la barrette 13b est accouplée à l'embase 13a, le dispositif électronique 11 est relié électriquement à la borne électrique 14 de la batterie B, tandis que, lorsque la barrette 13b est séparée de l'embase 13a, la batterie B est isolée.

Le coffre à batterie 1 tel que représenté sur la figure 1 peut être fixé à un véhicule par ses quatre coins.

A cet effet, deux pattes de positionnement 15 et 16 et deux pattes de fixation 17 et 18 sont situées sur l'enveloppe externe 2 du coffre à batterie 1 diagonalement opposées les unes aux autres. Chaque patte 15, 16, 17 et 18 est située à un coin du coffre à batterie 1 et peut être fixée sur le cadre latéral 7 de l'enveloppe externe 2 par le biais de visseries.

Les pattes de positionnement 15, 16 et les pattes de fixation 17, 18 présentent des formes générales en « équerre ». On définit comme « équerre », toute pièce métallique à angle droit à section en forme de L destinée à fixer des assemblages entre eux.

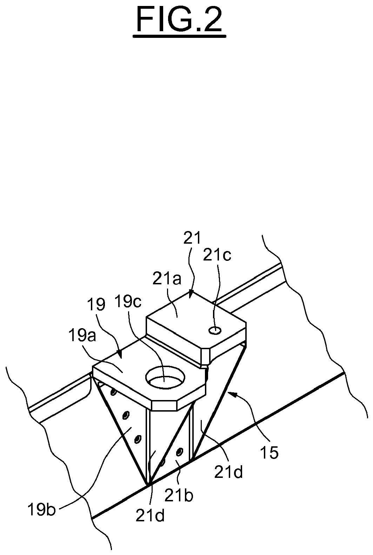

Comme on peut le voir le mieux sur la figure 2, la patte de positionnement 15 présente une équerre de positionnement 19 et une équerre de fixation 21 reliée à l'équerre de positionnement. L'équerre 19 comprend une embase 19a, et une plaque de fixation 19b destinée à la fixation sur le cadre 7 du coffre à batterie 1. L'embase 19a de l'équerre de positionnement 19 présente un passage traversant 19c de forme générale cylindrique.

L'équerre de fixation 21 comprend une embase 21a et une plaque de fixation 21b destinée à la fixation sur le cadre 7 de l'enveloppe 2. L'équerre de fixation 21 comprend des nervures 21d de part et d'autre de l'équerre de fixation 21. Ces nervures 21d permettent de rigidifier la patte de fixation 15. Les deux équerres 19, 21 sont reliées entre elles par une des nervures 21d.

La patte de positionnement 16 présente une équerre de positionnement 20 (figure 1) et une équerre de fixation 22 reliée à l'équerre de positionnement 20. L'équerre 20 comporte une embase 20a et une plaque de fixation sur le cadre 7. L'embase 20a présente un passage traversant 20c. L'équerre de fixation 22 comporte une embase 22a et une plaque de fixation 22b.

Les embases 19a et 20a peuvent avoir une forme semi-circulaire ou une forme rectangulaire ou carrée. L'embase 21a de l'équerre de fixation 21 présente un taraudage 21c (figure 2) capable de coopérer avec, par exemple, une tige filetée (non représentée). L'embase 22a présente un taraudage identique que l'on aperçoit sur la figure 1.

La plaque de fixation 19b est illustrée sur les figures 1 et 2 à titre d'exemple non limitatif, avec une forme générale triangulaire et la plaque de fixation 21b avec une forme générale rectangulaire. La plaque de fixation 22b est également rectangulaire. On notera que les plaques de fixation pourraient être, de manière générale, de forme géométrique à trois ou quatre cotés.

On notera que les embases 19a et 21a sont disposées sensiblement au même niveau, en étant légèrement décalées, l'embase 21a se situant au dessus du niveau de l'embase 19a. Les deux embases 19a et 21a sont situées légèrement au dessus du niveau du couvercle 5. Les embases 20a et 22a sont quant à elles situées légèrement au dessous du niveau du fond 6. L'embase 17b est située sensiblement au niveau du fond 6 tandis que l'embase correspondante de la patte de fixation 18 est sensiblement au niveau du couvercle 5. Cette disposition dans l'espace des différentes embases présente l'avantage d'équilibrer au mieux le coffre à batterie 1 lors des opérations de montage qui s'en trouvent facilitées.

La patte de fixation 17 comprend une équerre 17a, avec une embase 17b. Deux nervures 17d sont fixées de chaque coté de l'équerre 17a. L'embase 17b présente un taraudage apte à coopérer avec une tige filetée (non représentée). La patte de fixation 17 est fixée au cadre 7 à un de ses coins.

La deuxième patte de fixation 18, fixée au coin diamétralement opposé du cadre 7 par rapport à la patte de fixation 17 se trouve en face de l'équerre de fixation 21 de la patte de positionnement 15.

Ainsi le coffre à batterie 1 peut être fixé à un véhicule par quatre points de fixation définis respectivement par les équerres de fixation 21 et 22 et les pattes de fixation 17 et 18.

Les pattes de positionnement 15, 16 et les pattes de fixation 17, 18 sont de préférence réalisées en matériau métallique.

On notera que les équerres de fixation 21 et 22 pourraient être indépendantes des équerres de positionnement 19 et 20. De manière générale, les pattes de positionnement 15, 16 et les pattes de fixation 17, 18 pourraient être situées à d'autres endroits sur l'enveloppe externe 3 du coffre à batterie 1.

Le nombre de points de fixation du coffre à batterie 1 sur un véhicule pourrait également être supérieur à quatre.

Tel qu'illustré sur la figure 1, le compartiment spécifique 12 dans lequel se trouve le dispositif électrique ou électronique 11 de gestion des éléments accumulateurs d'énergie comprend deux pattes de fixation 23 situées de part et d'autre du compartiment spécifique 12. Chaque patte de fixation 23 comprend une partie 23a en équerre et deux nervures 23b permettant de rigidifier la patte de fixation 23.

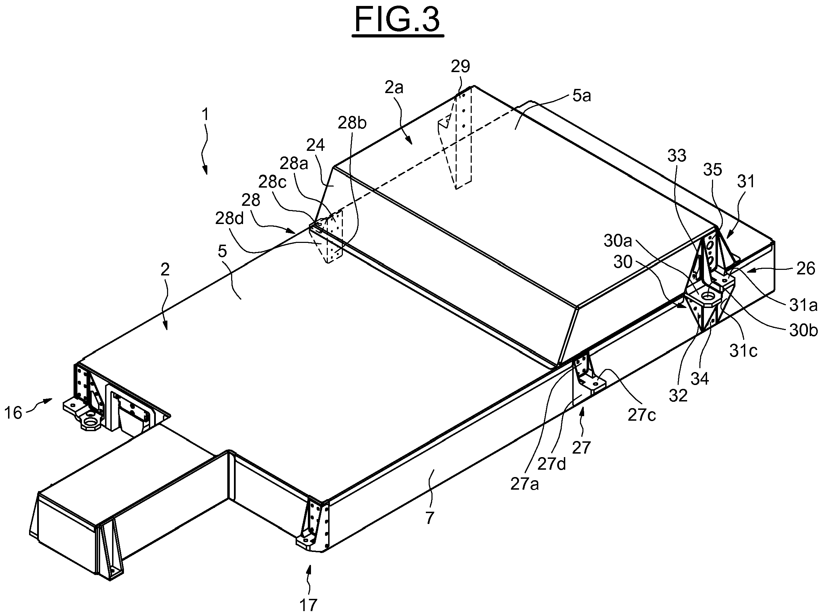

Le coffre à batterie 1 tel qu'illustré à la figure 3, sur laquelle les éléments analogues portent les mêmes références, comprend une enveloppe externe 2 telle que définie sur la figure 1 et une seconde enveloppe 2a comprenant un cadre latéral 24 délimitant une seconde chambre intérieure de réception d'éléments accumulateur d'énergie, afin d'alimenter un véhicule électrique ou hybride en énergie électrique en fonction du besoin énergétique. L'enveloppe 2a comprend un couvercle 5a placé au dessus du couvercle 5 et reliée à celui-ci par l'intermédiaire du cadre 24.

De la même manière que la chambre de réception 3 illustrée à la figure 1, la seconde chambre de réception délimitée par le cadre 24 comprend un cloisonnement interne non illustré sur la figure, délimitant des compartiments de réception de blocs d'éléments accumulateur d'énergie.

Le coffre de batterie 1, tel que représenté sur la figure 3, peut être fixé à un véhicule par six points de fixation.

A cet effet, en plus de la patte de positionnement 16 et de la patte de fixation 17, montées sur l'enveloppe externe 2, une patte de positionnement 26 est montée à la fois sur l'enveloppe externe 2 et sur l'enveloppe externe 2a. Les deux pattes de positionnement 16 et 26 sont sensiblement diagonalement opposées l'une à l'autre. Deux pattes de fixation supplémentaires 27 et 28 sont montées sur l'enveloppe externe 2 et une patte de fixation 29 est montée à la fois sur l'enveloppe externe 2 et sur l'enveloppe externe 2a. Les pattes de fixation 27 et 28 sont situées latéralement de part et d'autre du coffre à batterie 1, et les pattes de fixation 17 et 29 sont sensiblement diagonalement opposées l'une à l'autre.

La patte de positionnement 26 comprend un ensemble de positionnement 30 et un ensemble de fixation 31. L'ensemble de positionnement 30 est composé de deux équerres 32, 33 reliées par une embase 30a commune. Les équerres 32 et 33 comprennent chacune une plaque de fixation fixées respectivement à chacune des enveloppes externes 2 et 2a du coffre à batterie 1. Dans l'exemple illustré, ces plaques de fixation ont une forme générale triangulaire ; on notera qu'elles pourraient être de forme rectangulaire. L'embase 30a commune aux deux équerres 32 et 33 comporte un passage 30b de forme générale cylindrique. On notera que la forme du passage 30b pourrait être différente, par exemple, conique.

L'ensemble de fixation 31 est composé de deux équerres de fixation 34, 35 reliées par une embase commune. Les équerres 34 et 35 comprennent chacune une plaque de fixation fixées respectivement à chacune des enveloppes externes 2 et 2a du coffre à batterie 1. Dans l'exemple illustré, les plaques de fixation ont une forme générale rectangulaire ; on notera qu'elles pourraient être de forme triangulaire. L'embase 31a commune aux deux équerres 34 et 35 comporte un taraudage.

L'ensemble de fixation 31, tel qu'illustré à la figure 3, comprend deux nervures 31c de chaque coté de l'ensemble 31 afin de rigidifier la patte de fixation 26. Les ensembles de positionnement 30 et de fixation 31 sont reliés entre eux par une des nervures 31c.

La deuxième patte de fixation 29 présente sensiblement la même structure que l'ensemble de fixation 31 de la patte de positionnement 26.

Les troisième et quatrième pattes de fixation 27, 28 comprennent chacune deux plaques de fixation 27a, 28a de part et d'autre d'une embase 27c, 28c de manière à former deux équerres. Chaque patte de fixation 27, 28 est montée latéralement sur l'enveloppe externe 2 du coffre à batterie 1. Deux nervures 27d, 28d sont fixées de chaque coté des pattes de fixation 27, 28. Chaque embase 27c, 28c comporte un taraudage apte à coopérer avec une tige filetée (non représentée). On notera que les embases 30a et 31a sont situées sensiblement au niveau du couvercle 5 c'est-à-dire au niveau de la séparation entre l'enveloppe externe 2 et l'enveloppe externe 2a. Les embases 27c et 28c se situent sensiblement au milieu du cadre 7.

On notera que les quatre pattes de fixation 17, 27, 28 et 29 pourraient être identiques.

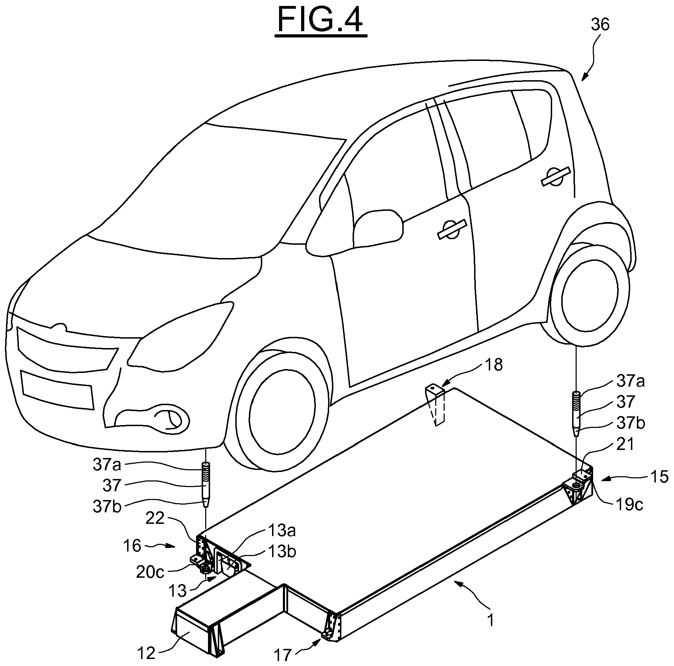

Le montage d'un coffre à batterie 1 selon la figure 2 sur un véhicule 36 est illustré à la figure 4.

Le véhicule 36 est illustré à titre d'exemple non limitatif. Le procédé de montage pourrait être adapté à tout type de véhicule automobile. Le montage du coffre à batterie 1 sous le châssis du véhicule 36 comprend une étape de positionnement et une étape de fixation du coffre à batterie 1.

Avant de manipuler le coffre à batterie 1, il est nécessaire de déconnecter le sectionneur 13 du dispositif électronique 11 situé dans le compartiment spécifique 12. Pour cela, il convient de séparer l'organe amovible 13b, par exemple une barrette de coupure, de l'embase 13a située sur l'enveloppe externe 3 du coffre à batterie 1.

Afin de positionner le coffre à batterie 1, on utilise deux plots de positionnement 37. Chaque plot de positionnement 37 est de forme générale cylindrique et comprend une extrémité cylindrique filetée 37a et une extrémité opposée conique non filetée 37b.

La première étape consiste à visser l'extrémité filetée 37a du plot de positionnement 37 dans un taraudage (non représenté) prévu sous le châssis du véhicule 36. A cet effet, on peut prévoir soit de surélever le véhicule 36 par un dispositif d'élévation standard, soit de positionner le véhicule 36 au dessus d'une fosse prévue sur le sol, de manière à accéder sous le châssis du véhicule 36.

Une fois les plots de positionnement 37 vissés sur le véhicule 36, il convient de créer un mouvement relatif entre le coffre à batterie 1 et le véhicule 36. A cet effet, on peut soit abaisser le véhicule 36 lorsque celui-ci a été surélevé, soit surélever le coffre à batterie 1, soit abaisser le véhicule 36 et surélever le coffre à batterie 1, de manière à positionner les plots de positionnement 37 dans les passages 19c et 20c prévus respectivement sur les pattes de positionnement 15 et 16.

Lorsque chaque extrémité conique 37b des deux plots de positionnement 37 est insérée dans les passages 19c et 20c, on continue le mouvement relatif entre le coffre à batterie 1 et le véhicule 36 de façon à positionner le coffre à batterie 1 dans un logement (non représenté) situé sous le châssis du véhicule 36.

Les passages 19c et 20c ont avantageusement un diamètre légèrement supérieur au diamètre des plots de positionnement 37.

Lorsque le coffre à batterie 1 est correctement positionné sous le châssis du véhicule 36, il convient de fixer le coffre à batterie 1 au châssis du véhicule 36. A cet effet, on utilise les pattes de fixation 17, 18 ainsi que les équerres de fixation 21 et 22 des pattes de positionnement 15 et 16. La fixation se fait, par exemple, par vissage. On notera que tout autre moyen permettant la fixation du coffre 1 sur le véhicule 36 peut être envisagé, telle qu'une fixation au quart de tour, par verrous ou par crochets.

Une fois le coffre à batterie 1 positionné et fixé au véhicule 36, on accouple la barrette de coupure 13b avec l'embase 13a du sectionneur 13, de manière à reconnecter le dispositif électronique 11 aux blocs 9 d'éléments accumulateur d'énergie.

Pour procéder au démontage du coffre à batterie 1 du véhicule 36, on agit de la manière inverse. Dans un premier temps, la barrette de coupure 13b est séparée de l'embase 13a du sectionneur 13. Ensuite on dévisse les vis de fixation des pattes de fixation 17, 18 et des pattes de positionnement 15 et 16.

Lors d'un changement de coffre à batterie 1, il n'est pas toujours nécessaire de dévisser les plots de positionnement 37. En effet, une fois les plots de positionnement 37 vissés au châssis du véhicule 36, ils peuvent n'être dévissés que pour les changer lorsqu'ils sont défectueux.

On notera que le procédé de montage et démontage d'un coffre à batterie n'est pas limité au coffre à batterie décrit ci-dessus et s'applique à tout type de coffre à batterie sur lequel on fixe des pattes de positionnement aptes à recevoir des plots de positionnement.

Grâce à l'invention qui vient d'être décrite, le coffre à batterie est aisément et rapidement positionné et fixé sur un véhicule automobile électrique ou hybride.

## Revendications

1. Coffre à batterie (1) pour véhicule comprenant au moins une enveloppe externe (2) délimitant une chambre de réception (3) de la batterie (9) et comprenant un support (4) et un couvercle amovible (5) reliés entre eux, le coffre (1) comprenant une première patte de positionnement (15), une deuxième patte de positionnement (16) et des pattes de fixation (17, 18) dudit coffre à batterie (1) sur le véhicule, lesdites pattes de positionnement (15, 16) et lesdites pattes de fixation (17, 18) étant montées sur l'enveloppe externe (2), **caractérisé en ce que** chacune des première et deuxième pattes de positionnement (15, 16) comprend une équerre de positionnement en forme de L (19, 20) et une équerre de fixation en forme de L (21, 22) reliée à l'équerre de positionnement, lesdites équerres (19, 20, 21, 22) étant fixées sur l'enveloppe externe (2) du coffre à batterie (1), chacune des équerre de positionnement (19, 20) comprend une embase (19a, 20a) comportant un passage de réception (19c, 20c) d'un plot de positionnement (37) comprenant une extrémité filetée (37a) adaptée pour être vissée dans un taraudage prévu sous le châssis du véhicule et une extrémité conique (37b) adaptée pour s'insérer dans le passage de réception (19c, 20c), et une plaque de fixation (19b) destinée à la fixation sur l'enveloppe (2) du coffre à batterie (1), et chacune des équerres de fixation (21, 22) comprend une embase (21a, 22a) et une plaque de fixation (21b, 22b) destinée à la fixation sur l'enveloppe (2) du coffre à batterie (1), lesdites embases (19a, 21a) de la première équerre de positionnement (15) étant disposées sensiblement au même niveau, légèrement au-dessus du niveau du couvercle (5) et lesdites embases (20a, 22a) de la deuxième équerre de positionnement (16) étant quant à elles situées légèrement en dessous du niveau du fond (6).

2. Coffre à batterie selon la revendication 1, comprenant une deuxième enveloppe externe (2a) délimitant une seconde chambre de réception de batterie et comprenant un couvercle (5a) placé au-dessus du premier couvercle (5).

3. Coffre à batterie selon la revendication 2, selon lequel une des pattes de positionnement (26) comprend deux équerres supplémentaires (33, 35) reliées à deux premières équerres (32, 34), lesdites équerres supplémentaires (33, 35) étant montées sur la seconde enveloppe externe (2a).

4. Coffre à batterie selon l'une quelconque des revendications précédentes, comprenant un cloisonnement interne (3a) délimitant des compartiments (8) dans ladite chambre de réception (3), lesdits compartiments (8) étant adaptés pour réceptionner des blocs accumulateurs d'énergie (9).

5. Coffre à batterie selon l'une quelconque des revendications précédentes, comprenant au moins un évidement extérieur (13c) en creux pour la réception d'un organe amovible (13b) d'un sectionneur (13) relié à la batterie.

6. Procédé de montage d'un coffre à batterie sur un véhicule, ledit coffre à batterie (1) comprenant au moins une enveloppe externe (2) délimitant une chambre de réception (3) de la batterie, **caractérisé en ce que** :
- on visse des plots de positionnement (37) sur le véhicule (36),
- on met en place le coffre à batterie (1) sur le véhicule (36), de sorte que les plots de positionnement (37) soient insérés dans des première et deuxième pattes de positionnement (15, 16) prévues sur ledit coffre à batterie (1), chacune des première et deuxième pattes de positionnement (15, 16) comprenant une équerre de positionnement en forme de L (19, 20) et une équerre de fixation en forme de L (21, 22) reliée à l'équerre de positionnement, lesdites équerres (19, 20, 21, 22) étant fixées sur l'enveloppe externe (2) du coffre à batterie (1), chacune des équerre de positionnement (19, 20) comprenant une embase (19a, 20a) comportant un passage de réception (19c, 20c) d'un plot de positionnement (37) comprenant une extrémité filetée (37a) adaptée pour être vissée dans un taraudage prévu sous le châssis du véhicule et une extrémité conique (37b) adaptée pour s'insérer dans le passage de réception (19c, 20c), et une plaque de fixation (19b) destinée à la fixation sur l'enveloppe (2) du coffre à batterie (1), et chacune des équerres de fixation (21, 22) comprenant une embase (21a, 22a) et une plaque de fixation (21b, 22b) destinée à la fixation sur l'enveloppe (2) du coffre à batterie (1), lesdites embases (19a, 21a) de la première équerre de positionnement (15) étant disposées sensiblement au même niveau, légèrement au-dessus du niveau du couvercle (5) et lesdites embases (20a, 22a) de la deuxième équerre de positionnement (16) étant quant à elles situées légèrement en dessous du niveau du fond (6),
et **en ce que**
- on fixe le coffre à batterie (1) sur le véhicule (36), par l'intermédiaire de pattes de fixation (17, 18) prévues sur le coffre à batterie (1).

7. Procédé de montage selon la revendication 6, selon lequel on visse deux plots de positionnement (37) sur le véhicule (36).

8. Procédé de montage selon l'une des revendications 6 ou 7, selon lequel on abaisse le véhicule (36) et/ou on surélève le coffre à batterie (1) de manière à réaliser l'étape de mise en place.

9. Procédé de montage selon l'une des revendications 6 à 8, dans lequel, lors de la mise en place du coffre à batterie, les pattes de positionnement (15, 16) sont guidées par des extrémités coniques (37b) des plots de positionnement (37).

10. Procédé de montage selon l'une des revendications 6 à 9, dans lequel on fixe les pattes de fixation (17, 18) sur le véhicule (36) par le biais de visseries.

11. Procédé de montage selon l'une des revendications 6 à 10, dans lequel, avant de manipuler le coffre à batterie (1), on sépare un organe amovible (13b) d'un sectionneur (13) relié à la batterie, de manière à isoler le coffre à batterie (1) d'un dispositif électronique (11) de gestion dudit coffre à batterie (1).

## Patentansprüche

1. Batteriekasten (1) für ein Fahrzeug, umfassend mindestens ein äußeres Gehäuse (2), das eine Kammer (3) zur Aufnahme der Batterie (9) begrenzt und eine Stütze (4) umfasst, und einen entfernbaren Deckel (5), die miteinander verbunden sind, wobei der Kasten (1) einen ersten Positionieransatz (15), einen zweiten Positionieransatz (16) und Ansätze (17, 18) zum Befestigen des Batteriekastens (1) an dem Fahrzeug umfasst, wobei die Positionieransätze (15, 16) und die Befestigungsansätze (17, 18) an dem äußeren Gehäuse (2) angebracht sind, **dadurch gekennzeichnet, dass** jeder des ersten und zweiten Positionieransatzes (15, 16) einen Positionierwinkel (19, 20) in Form eines L und einen Befestigungswinkel (21, 22) in Form eines L, der mit dem Positionierwinkel verbunden ist, umfasst, wobei die Winkel (19, 20, 21, 22) an dem äußeren Gehäuse (2) des Batteriekastens (1) befestigt sind, wobei jeder der Positionierwinkel (19, 20) eine Basis (19a, 20a), die einen Durchgang (19c, 20c) zur Aufnahme eines Positioniernockens (37) aufweist, der ein Gewindeende (37a), das zum Einschrauben in ein unter dem Chassis des Fahrzeugs vorgesehenes Innengewinde ausgeführt ist, und ein konisches Ende (37b), das zum Einführen in den Aufnahmedurchgang (19c, 20c) ausgeführt ist, umfasst, und eine Befestigungsplatte (19b), die zur Befestigung an dem Gehäuse (2) des Batteriekastens (1) bestimmt ist, umfasst und jeder der Befestigungswinkel (21, 22) eine Basis (21a, 22a) und eine Befestigungsplatte (21b, 22b), die zur Befestigung an dem Gehäuse (2) des Batteriekastens (1) bestimmt ist, umfasst, wobei die Basen (19a, 21a) des ersten Positionierwinkels (15) im Wesentlichen auf gleicher Höhe etwas über der Höhe des Deckels (5) angeordnet sind und die Basen (20a, 22a) des zweiten Positionierwinkels (16) wiederum etwas unter der Höhe des Bodens (6) angeordnet sind.

2. Batteriekasten nach Anspruch 1, der ein zweites äußeres Gehäuse (2a) umfasst, das eine zweite Kammer zur Aufnahme der Batterie begrenzt und einen auf dem ersten Deckel (5) platzierten Deckel (5a) umfasst.

3. Batteriekasten nach Anspruch 2, wobei einer der Positionieransätze (26) zwei zusätzliche Winkel (33, 35) umfasst, die mit zwei ersten Winkeln (32, 34) verbunden sind, wobei die zusätzlichen Winkel (33, 35) an dem zweiten äußeren Gehäuse (2a) angebracht sind.

4. Batteriekasten nach einem der vorhergehenden Ansprüche, der eine innere Unterteilung (3a) umfasst, die Fächer (8) in der Aufnahmekammer (3) begrenzt, wobei die Fächer (8) zur Aufnahme von Energiespeicherzelleneinheiten (9) ausgeführt sind.

5. Batteriekasten nach einem der vorhergehenden Ansprüche, der mindestens eine vertiefte äußere Ausnehmung (13c) zur Aufnahme eines entfernbaren Glieds (13b) eines mit der Batterie verbundenen Trennschalters (13) umfasst.

6. Verfahren zur Montage eines Batteriekastens an ein Fahrzeug, wobei der Batteriekasten (1) mindestens ein äußeres Gehäuse (2) umfasst, das eine Kammer (3) zur Aufnahme der Batterie begrenzt, **dadurch gekennzeichnet, dass**:
- Positioniernocken (37) an das Fahrzeug (36) geschraubt werden,
- der Batteriekasten (1) so an das Fahrzeug (36) platziert wird, dass die Positioniernocken (37) in den am Batteriekasten (1) vorgesehenen ersten und zweiten Positionieransatz (15, 16) eingeführt werden, wobei jeder des ersten und zweiten Postionieransatzes (15, 16) einen Positionierwinkel (19, 20) in Form eines L und einen Befestigungswinkel (21, 22) in Form eines L, der mit dem Positionierwinkel verbunden ist, umfasst, wobei die Winkel (19, 20, 21, 22) am äußeren Gehäuse (2) des Batteriekastens (1) befestigt sind, wobei jeder der Positionierwinkel (19, 20) eine Basis (19a, 20a), die einen Durchgang (19c, 20c) zur Aufnahme eines Positioniernockens (37) aufweist, der ein Gewindeende (37a), das zum Einschrauben in ein unter dem Chassis des Fahrzeugs vorgesehenes Innengewinde ausgeführt ist, und ein konisches Ende (37b), das zum Einführen in den Aufnahmedurchgang (19c, 20c) ausgeführt ist, umfasst, und eine Befestigungsplatte (19b), die zur Befestigung an dem Gehäuse (2) des Batteriekastens (1) bestimmt ist, umfasst und jeder der Befestigungswinkel (21, 22) eine Basis (21a, 22a) und eine Befestigungsplatte (21b, 22b), die zur Befestigung an dem Gehäuse (2) des Batteriekastens (1) bestimmt ist, umfasst, wobei die Basen (19a, 21a) des ersten Positionierwinkels (15) im Wesentlichen auf gleicher Höhe etwas über der Höhe des Deckels (5) angeordnet sind und die Basen (20a, 22a) des zweiten Positionierwinkels (16) wiederum etwas unter der Höhe des Bodens (6) angeordnet sind,
und dass
- der Batteriekasten (1) mittels am Batteriekasten (1) vorgesehener Befestigungsansätze (17, 18) am Fahrzeug (36) befestigt wird.

7. Montageverfahren nach Anspruch 6, wobei zwei Positioniernocken (37) an das Fahrzeug (36) geschraubt werden.

8. Montageverfahren nach Anspruch 6 oder 7, wobei das Fahrzeug (36) abgesenkt und/oder der Batteriekasten (1) angehoben wird, um den Platzierungsschritt durchzuführen.

9. Montageverfahren nach einem der Ansprüche 6 bis 8, wobei beim Platzieren des Batteriekastens die Positionieransätze (15, 16) durch konische Enden (37b) der Positioniernocken (37) geführt werden.

10. Montageverfahren nach einem der Ansprüche 6 bis 9, wobei die Befestigungsansätze (17, 18) mittels Schrauben am Fahrzeug (36) befestigt werden.

11. Montageverfahren nach einem der Ansprüche 6 bis 10, wobei vor dem Handhaben des Batteriekastens (1) ein entfernbares Glied (13b) von einem mit der Batterie verbundenen Trennschalter (13) getrennt wird, um den Batteriekasten (1) von einer elektronischen Vorrichtung (11) zur Verwaltung des Batteriekastens (1) zu isolieren.

## Claims

1. Vehicle battery box (1) comprising at least one outer casing (2) delimiting a chamber (3) receiving the battery (9) and comprising a support (4) and a removable cover (5) connected to each other, the box (1) comprising a first positioning lug (15), a second positioning lug (16) and lugs (17, 18) for fixing said battery box (1) to the vehicle, said positioning lugs (15, 16) and said fixing lugs (17, 18) being mounted on the outer casing (2), **characterized in that** each positioning lug (15, 16) comprises a positioning L-shaped bracket (19, 20) and a fixing L-shaped bracket (21,22) connected to the positioning bracket, said brackets (19, 20, 21, 22) being fixed to the outer casing (2) of the battery box (1), each positioning bracket (19, 20) comprises a base (19a, 20a) comprising a passage (19c, 20c) receiving a positioning stud (37) having a threaded end (37a) adapted to be screwed into a screwthread provided under the chassis of the vehicle and a conical end (37b) adapted to be inserted in the receiving passage (19c, 20c), and a fixing plate (19b) designed to be fixed on the casing (2) of the battery box, and each fixing bracket (21, 22) comprises a base (21a, 22a) and a fixing plate (21b, 22b) designed to be fixed on the casing (2) of the battery box (1), said bases (19a, 21a) of the fist positioning bracket (15) being disposed at substantially the same level, slightly above the level of the cover (5), and said bases (20a, 22a) of the second positioning bracket (16) being for their part are situated slightly below the level of the bottom 6.

2. Battery box according to any one of Claims 1 to 4, comprising a second outer casing (2a) delimiting a second battery receiving chamber and comprising a cover (5a) placed over the first cover (5).

3. Battery box according to Claim 2, wherein one positioning lugs (26) comprises two supplementary brackets (33, 35) connected to two first brackets (32, 34), said supplements brackets (33, 35) being mounted on the second outer casing (2a).

4. Battery box according to any one of the preceding claims, comprising internal partitions (3a) delimiting compartments (8) in said receiving chamber (3), said compartments (8) being adapted to receive energy storage cell units (9).

5. Battery box according to any one of the preceding claims, comprising at least one exterior recess (13c) for receiving a removable member (13b) of an isolator (13) connected to the battery.

6. Method of mounting a battery box on a vehicle, said battery box (1) comprising at least one outer casing (2) delimiting a chamber (3) receiving the battery, **characterized in that**:
- positioning studs (37) are screwed to the vehicle (36),
- the battery box (1) is placed on the vehicle (36) so that the positioning studs (37) are inserted in positioning lugs (15, 16) provided on said battery box (1), each positioning lug (15, 16) comprises a positioning L-shaped bracket (19, 20) and a fixing L-shaped bracket (21,22) connected to the positioning bracket, said brackets (19, 20, 21, 22) being fixed to the outer casing (2) of the battery box (1), each positioning bracket (19, 20) comprises a base (19a, 20a) comprising a passage (19c, 20c) receiving a positioning stud (37) having a threaded end (37a) adapted to be screwed into a screwthread provided under the chassis of the vehicle and a conical end (37b) adapted to be inserted in the receiving passage (19c, 20c), and a fixing plate (19b) designed to be fixed on the casing (2) of the battery box, and each fixing bracket (21, 22) comprises a base (21a, 22a) and a fixing plate (21b, 22b) designed to be fixed on the casing (2) of the battery box (1), said bases (19a, 21a) of the fist positioning bracket (15) being disposed at substantially the same level, slightly above the level of the cover (5), and said bases (20a, 22a) of the second positioning bracket (16) being for their part are situated slightly below the level of the bottom 6, and
- the battery box (1) is fixed to the vehicle (36) by means of fixing lugs (17, 18) provided on the battery box (1).

7. Mounting method according Claim 6, wherein two positioning studs (37) are screwed to the vehicle (36).

8. Mounting method according to either one of Claims 6 or 7, wherein the vehicle (36) is lowered and/or the battery box (1) is raised to carry out the positioning step.

9. Mounting method according to any one of Claims 6 to 8, wherein, when positioning the battery box, the positioning lugs (15, 16) are guided by conical ends (37b) of the positioning studs (37).

10. Mounting method according to any one of Claims 6 to 9, wherein the fixing lugs (17, 18) are fixed to the vehicle (36) by means of bolts.

11. Mounting method according to any one of Claims 6 to 10, wherein, before manipulating the battery box (1), a removable member (13b) if separated from an isolator (13) connected to the battery to isolate the battery box (1) from an electronic device (11) for management of said battery box (1).
